# EUROPEAN PATENT APPLICATION

(11) **EP 3 095 835 A1**
(43) Date of publication of application: **23.11.2016**
(21) Application number: 16166400.8
(22) Date of filing: 21.04.2016
(51) Int. Cl.: C10B 47/30, C10B 47/40, C10B 53/00, C10B 19/00, C10L 9/08, C10B 53/02

(54) **ROTARY FURNACE WITH MICROWAVE AS ITS ENERGY**

(30) Priority: 22.05.2015 CN 201510265288
(71) Applicant: Chengdu En-shain Technology Incorporation, Chengdu Sichuan (CN); Nanjing SanLe Microwave Technology Development Co. LTD, Nanjing Jiangsu (CN)
(72) Inventor: Lan, Dapeng, Chengdu (CN); Xi, Weilin, Nanjing (CN); Liu, Lin, Chengdu (CN); Yang, Qi, Nanjing (CN); Wu, Yue, Chengdu (CN); Wang, Yong, Nanjing (CN); Cheng, Minglong, Chengdu (CN); Zheng, Yingqi, Nanjing (CN); Jiang, Ming, Chengdu (CN); Mao, Jiaojie, Nanjing (CN); Huang, Jianbo, Chengdu (CN); Zhang, Weiyan, Nanjing (CN)
(74) Representative: Evans, Huw David Duncan

(57) **Abstract**

A rotary furnace which uses microwave as the energy, and it includes a kiln head which runs through and is connected to a rotary kettle, multiple parts of the kiln head are equipped with microwave feeding inlet which is used to introduce the external microwave sources into the rotary kettle to heat the material; the kiln head is connected to the feeding mechanism, and the rotary kettle is set up with a collecting opening and a discharging mechanism. The Rotary furnace of this invention makes use of the microwave energy to rapidly heat the material inside the rotary kettle, and rotates the rotary kettle at the same time, to make the material more uniformly heated and improve the material pyrolyzing efficiency, and it can greatly improve the pyrolyzing and separating efficiency of the material, and effectively reduce the energy consumption; in the meanwhile, it also avoids the secondary pollution to the environment caused by the burning of the heating energy, thus effectively improves the economic and social benefits. (Fig.1)

## Description

This invention relates to a new type of rotary furnace which uses microwave as the energy, mainly used for material drying and pyrolyzing, separating and extracting.

A rotary furnace is a common equipment for material drying, and currently the rotary furnace used for material drying mainly makes use of the conventional energy such as electricity, coal, and gas, etc., to conduct external heating of the rotary kettle on the rotary furnace thus to raise the temperature of the material inside the kettle for final extracting and separating. Conventional energy has some of the following disadvantages: low thermal conversion efficiency, low time efficiency, high energy consumption, and the emission after the combustion of conventional energy will cause secondary pollution to the environment. The rotary furnace using conventional energy, due to the low heat utilization efficiency, results in low drying treatment ability, which usually is 1 m³ per hour or so.

When disposing oil-containing and water-containing drilling cuttings generated in oilfield exploitation, the disadvantages of the rotary furnace that uses conventional energy, such as low treating capacity, open fire generated in external heating with a large security risk, etc. will be especially prominent, especially with the excessive mining of shale gas, the drilling waste generated like oil-based rock debris significantly increases, and in the exploiting and de-oiling process of oil sands mine at home and abroad, so far there has been no high efficiency and low energy consumption technology for oil removal, nor corresponding pyrolyzing and separating process equipment.

The purpose of the present invention is to provide a new type of rotary furnace with microwave used as its energy, which can greatly improve the efficiency of pyrolyzing and separating process, effectively reduce the energy consumption with high security level, and reduce the secondary pollution to the environment.

To achieve the above purpose, the technical scheme taken in an embodiment of the invention is:
Include a kiln head which runs through and is connected to a rotary kettle, and multiple parts of the kiln head are equipped with microwave feeding inlet which is connected to a microwave generator to introduce the microwave sources generated by the microwave generator or other external microwave sources into the rotary kettle to heat the material; the kiln head is connected to a feeding mechanism, and the rotary kettle is set up with a collecting opening and a discharging mechanism. Preferably, the rotary kettle is internally equipped with the spiral blade.

Preferably, a flexible sealing device is set up between the kiln head and the rotary kettle.

Preferably, the rotary kettle is driven to rotate by variable frequency motor.

Preferably, the internal surface of the rotary kettle is sprayed and coated with high-temperature resistance non-stick material.

Preferably, the height of the spiral blade is 1 mm -500 mm, and the thickness of the spiral blade is 2 mm -50 mm.

Beneficial effects achieved from the rotary furnace of this invention are:
Make use of the microwave energy to rapidly heat the material inside the rotary kettle, and rotate the rotary kettle at the same time, to make the material more uniformly heated, improve the material pyrolyzing efficiency, which can greatly improve the pyrolyzing and separating efficiency of the material and effectively reduce the energy consumption; in the meanwhile, it also avoids the secondary pollution to the environment caused by the burning of the heating energy and has a high safety level, thus can effectively improve the economic and social benefits.

An embodiment of the present invention will now be described by way of example only and with reference to the accompanying drawings, in which:
Figure 1 is a front view of an embodiment of rotary furnace with the microwave used as its energy in accordance with the present invention; and
Figure 2 is a left view of an embodiment of a new type of rotary furnace with the microwave used as its energy in accordance with the present invention.

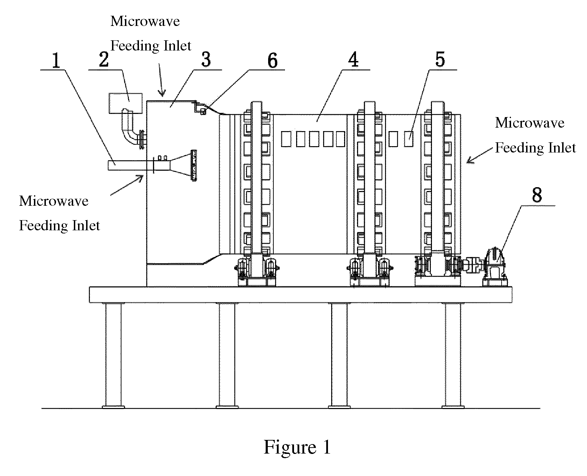

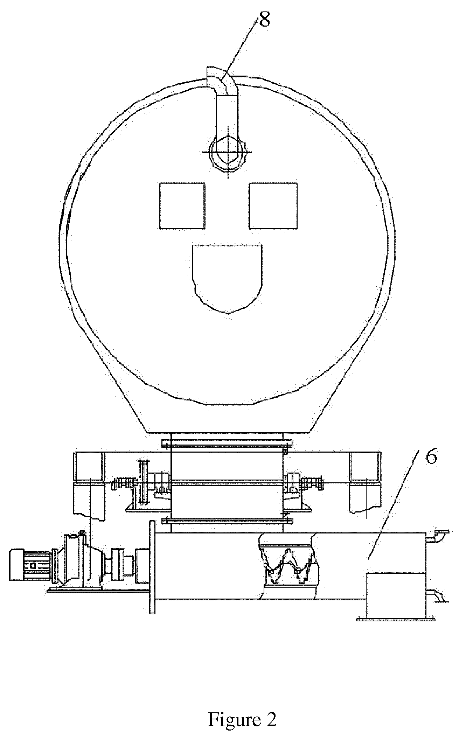

Embodiment 1: referring to figure 1 and 2, the rotary furnace includes the kiln head 2, and the kiln head 2 runs through and is connected to the rotary kettle 3, multiple parts of the kiln head 2 are equipped with microwave feeding inlet which is connected to the microwave generator, the microwave generated by the microwave generator enters the kiln head 3 via microwave feeding inlet, and the microwave generated by the microwave generator can heat the materials introduced into the kiln head 3, thus to achieve the purpose of pyrolyzing and separating of the material; the kiln head 2 is connected to the feeding mechanism 1 which lifts the material to run through the kiln head 2 to be conveyed into the rotary kettle 3, and the rotary kettle 3 is equipped with the collecting opening 8 and the discharging mechanism 6; the decomposed gas enters the condensing and recycling unit via the collecting opening 8 to be condensed and recycled, and the pyrolyzed solid substances are discharged via the discharging mechanism 6.

As shown in arrow of figure 1, microwave feeding inlet can be set up in multiple parts such as the left side, upper parts and right side of the kiln head 2.

Embodiment 2: refer to the figure 1 and 2, and as a preferred implementation of embodiment 1, the rotary kettle 3 is internally equipped with the spiral blade 4 which can stir and rotate the material in the rotary kettle 3 to make it uniformly heated, and it can also convey the material to the discharging outlet and adjust the microwave's field intensity distribution in the cavity, to make the microwave to more uniformly effect on the material.

Embodiment 3: refer to the figure 1 and 2, and as a preferred implementation of embodiment 1 or 2, a flexible sealing device 5 is set up between the kiln head 2 and the rotary kettle 3, to ensure that the high temperature gas generated by microwave and material pyrolyzing will not leak.

Embodiment 4: refer to the figure 1 and 2, and as a preferred implementation of embodiment 2 or 3, the rotary kettle 3 is driven to rotate by the variable frequency motor 7, and the rotary kettle 3 can rotate in the positive and reverse directions under the drive of the variable frequency motor 7, to drive the material to move forward or backward by the spiral blade 4, so as to achieve the purpose of feeding from the kiln head 2 and discharging from the kiln head 2, and the rotation speed may be adjustable from 1 r/min to 100 r/min.

Embodiment 5: as a preferred implementation of embodiment 1∼4, the internal surface of the rotary kettle 3 is sprayed and coated with high-temperature resistance non-stick material, to prevent oil-containing material from adhering on the internal surface of the rotary kettle 3, to improve the heating efficiency.

Embodiment 6: as a preferred implementation of embodiment 2, the height of the spiral blade 4 is 1 mm to 500 mm, and the thickness of the spiral blade 4 is 2 mm to 50 mm, the angle between the blade and the cavity axis is 0∼179o, and the angle of the blade can be adjusted to make the electric field distribution of the material more uniform.

The rotary furnace of this invention makes use of the microwave energy, and can be used in the drilling operation site or the oil field, and recycling of the chemical oil-containing material, it can rapid heat oil-containing material by using microwave technology, to enable the oil-containing material to pyrolyze and separate, so as to achieve the purpose of the recycling of oil-containing materials.

The implementation aforementioned is used to explain this invention, instead of restricting it, and any modification and change made within the protection scope of the spirit and claims of this invention will fall into the scope of protection of this invention.

## Claims

1. A rotary furnace which uses microwave as the energy, and it includes a kiln head, and the said kiln head runs through and is connected to a rotary kettle, which is **characterized in that**: multiple parts of the said kiln head are equipped with a microwave feeding inlet which is used to introduce the external microwave sources into the said rotary kettle to heat the material; the said kiln head is connected to a feeding mechanism, and the said rotary kettle is set up with a collecting opening and a discharging mechanism.

2. The rotary furnace of claim 1, wherein the said rotary kettle is internally equipped with spiral blade.

3. The rotary furnace of claim 1 or 2, wherein a flexible sealing device is set up between the said kiln head and the said rotary kettle.

4. The rotary furnace of claim 1 or 2, wherein the said rotary kettle is driven to rotate by variable frequency motor.

5. The rotary furnace of claim 1 or 2, wherein the internal surface of the said rotary kettle is sprayed or coated with high-temperature resistance non-stick material.

6. The rotary furnace of claim 2, wherein the height of said the spiral blade is 1mm∼500mm and the thickness of said the spiral blade is 2mm~50mm.
